# EUROPEAN PATENT SPECIFICATION

(11) **EP 2 493 150 B1**
(45) Date of publication and mention of the grant of the patent: **10.10.2018**
(21) Application number: 12157235.8
(22) Date of filing: 28.02.2012
(51) Int. Cl.: H04L 29/08, G06F 17/30

(54) **Mobile application metadata collection agent**
Mobiles Anwendungsmetadaten-Sammelmittel
Agent de collecte de métadonnées d'applications mobiles

(30) Priority: 28.02.2011 US 201161447455 P
(43) Date of publication of application: 29.08.2012
(73) Proprietor: Digi International Inc., Minnetonka, MN 55343 (US)
(72) Inventor: Husney, Jordan, Minneapolis, MN Minnesota 55419 (US)
(74) Representative: Hanna Moore + Curley

(56) References cited:
- CN-A- 101 729 981
- US-A1- 2008 014 913
- US-A1- 2010 318 534
- US-A1- 2011 034 158
- US-A1- 2011 126 239
- US-A1- 2012 196 629

## Description

### Field of the Invention

The invention relates generally to managing mobile wireless device data, and more specifically in one embodiment to a mobile application collection agent.

### Limited Copyright Waiver

A portion of the disclosure of this patent document contains material to which the claim of copyright protection is made. The copyright owner has no objection to the facsimile reproduction by any person of the patent document or the patent disclosure, as it appears in the U.S. Patent and Trademark Office file or records, but reserves all other rights whatsoever.

### Background

Cellular telephones and other such devices have in only a couple decades gone from being obscure and expensive luxuries to replacing traditional land-line telephones. It is increasingly common for people to carry a cellular phone with them nearly wherever they go, constantly having access to not only phone functionality, but also the ability to send text messages, emails, and run a variety of applications.

Cell phones are therefore nearly as common in many parts of the world as people, and are as widely distributed and mobile as the people who carry them. The recent rise in popularity of cellular data network and other similar devices such as tablet computers and wireless cellular network cards for notebook computers has further increased the number of networked mobile devices, and the number and variety of people who use them.

Devices such as these now regularly host a variety of applications in addition to providing basic communication functions such as sending SMS text messages or placing phone calls. For example, GPS programs that are operable to send location data to a server and receive location-specific map and related data have become common. Web browsers that are rapidly approaching the functionality of traditional desktop web browsers enable a mobile device user to surf the Internet. Weather applications can send location data, and receive and present weather maps, forecasts, and other such localized data to a mobile user. Other applications exist for recording and playing a variety of media, playing networked games, social networking, banking, and a variety of other purposes.

Many of these applications have a common thread in that they benefit from being able to exchange data with a server, whether to surf the web, exchange data for a game to be played, or maintain communication with friends over social media services. This application data is typically exchanged with servers or through network services that are preconfigured as part of the application, and are handled as data exchanges that are separate and distinct from one another and from other services such as SMS or cellular phone call data exchange.

Managing the effective and efficient exchange of a variety oftypes of data in a complex mobile device environment such as those described here is therefore desirable.

US2011034158 discloses a machine-controlled method that includes a mobile electronic device presenting to a mobile user a graphical user interface (GUI) that allows the mobile user to enter mobile user activity information corresponding to a particular mobile user activity, receiving the mobile user activity information from the mobile user through the GUI, creating a correlation between the mobile user activity information and the particular mobile user activity, and transmitting to a remote database system the mobile user activity information and the correlation between the mobile user activity information and the particular mobile user activity.

US2010318534 discloses a technique enabling intelligent retrieval of digital assets. The technique involves gathering metadata based on a scan of the digital assets. The gathered metadata includes metadata entries, each metadata entry identifying a particular digital asset and a particular set of digital asset properties of that particular digital asset. The technique further involves storing the digital assets in encrypted form within a digital asset repository of the electronic system after gathering the metadata, and updating a metadata database of the electronic system based on the metadata entries, the metadata database being distinct from the digital asset repository. Accordingly, while the digital assets are stored in the digital asset repository in encrypted form, specific digital assets within the digital asset repository are identifiable in response to a database search of the metadata database since the database search is able to use digital asset properties as searching criteria.

US2011/126239 discloses a method of processing EPG (Electronic Program Guide) metadata in a network device. The method includes performing a service discovery procedure utilizing multiple service discovery metadata components supplied by a service provider, receiving EPG metadata corresponding to a super group information element comprising both of a member element giving a group ID of another super group information element that has a higher level than a level of the super group information element and a level attribute giving a level of super group represented by the super group information element, wherein the member element is used to reference the other super group information element at a higher level, and processing the EPG metadata.

US2012/196629 discloses a method which provides for monitoring and analyzing communications of a monitored user on behalf of a monitoring user, to determine whether the communication includes a violation. For example, SMS messages, MMS messages, IMs, e-mails, social network site postings or voice mails of a child may be monitored on behalf of a parent. In one embodiment, an algorithm is used to analyze a normalized version of the communication, which algorithm is retrained using results of past analysis, to determine a probability of a communication including a violation.

### Summary

The present application provides a mobile networked device, a method of communicating metadata from a mobile networked device and a machine-readable medium with instructions stored thereon in accordance with the claims which follow.

### Brief Description of the Figures

Figure 1 shows an example environment comprising various mobile networked devices and cellular telephone towers, consistent with an example embodiment of the invention.
Figure 2 is a block diagram of a mobile networked device comprising a metadata module, consistent with an example embodiment of the invention.
Figure 3 is a flowchart showing a method of communicating metadata from a mobile networked device to a metadata consumer, consistent with an example embodiment of the invention.

### Detailed Description

In the following detailed description of example embodiments of the invention, reference is made to specific examples by way of drawings and illustrations. These examples are described in sufficient detail to enable those skilled in the art to practice the invention, and serve to illustrate how the invention may be applied to various purposes or embodiments. Other embodiments of the invention exist and are within the scope of the invention, and logical, mechanical, electrical, and other changes may be made without departing from the subject or scope of the present invention. Features or limitations of various embodiments of the invention described herein, however essential to the example embodiments in which they are incorporated, do not limit the invention as a whole, and any reference to the invention, its elements, operation, and application do not limit the invention as a whole but serve only to define these example embodiments. The following detailed description does not, therefore, limit the scope of the invention, which is defined only by the appended claims.

Cellular networks are often used for a variety of purposes other than making cellular phone calls, with the majority of traffic now being produced in support of web browsing, multimedia, and other such applications on mobile cellular devices. As the people owning these mobile devices increase in number and in their reliance on mobile cellular devices, the amount of data communicated in a geographic area becomes increasingly large. For example, only twenty years ago it would be uncommon for the average person walking down a street to have a cellular telephone at all, much less with them, whereas the average person now carries a cellular phone most places they go and over 90% of people regularly use cell phones.

This increase in the number and geographic diversity of cellular devices means that a very large number of mobile networked devices are distributed over a much broader geography than ever before. These devices are able to collect a wide variety of metadata regarding not only their own operation, such as battery life, but also their operation within the network, such as signal strength, and other metadata, such as geographic location. These metadata examples illustrate the tremendous amount of data that is being collected by the hundreds of millions of mobile cellular devices in the United States alone.

This data typically goes uncollected, or is only used for specific purposes on a per-user basis. For example, geographic location data derived from GPS or cell phone signal data may be used by a mapping location to provide maps of the area or to locate the user on a map, but is not typically collected or used for other purposes. Signal strength data is reflected on the mobile cellular device and known by the cellular network tower, but is typically not used for any additional purpose.

Some embodiments of the invention seek to collect metadata such as these in a systematic way, and in a further example to use this data from a large number of mobile cellular devices to produce compilation data that is additionally useful. For example, a metadata collection agent on a mobile cellular device may collect geographic location and signal strength of the device on a regular basis, and report this information to a central server. A cellular network provider can then use the compiled location and signal strength data to create accurate and detailed maps of coverage within its service area,
This differs from manual collection of the data in that the wide variety of mobile cellular customers using their devices for everyday purposes can contribute to the data set, making it more robust and more accurate. It also differs from applications designed specifically to authorize collection of such data and communicate it to the application provider, in that the metadata can be collected and accumulated without the user manually installing and actively running a specific, special-purpose application. User-initiated data collection has the further disadvantage that a typical user's motivation to spend time or energy to generate and send this type of metadata is quite low, so the data collected by applications such as the iPhone's Signals application is quite sparse and not representative of the population of mobile users as a whole.

Some embodiments of the invention therefore comprise an embedded mobile metadata collection communications agent that is operable to run in the background while other tasks are being performed, such as in the background of an operating system or application. In one such example, a mobile metadata collection and communications agent is provided as a part of a mobile cellular device operating system or firmware as provided by a manufacturer or service provider, such that periodic reports of metadata are sent to the provider. In another such example, a mobile cellular device communications toolkit is provided or licensed to application developers, where the toolkit and license include a metadata collection agent that runs in the background, collecting and communicating metadata whenever the application is running.

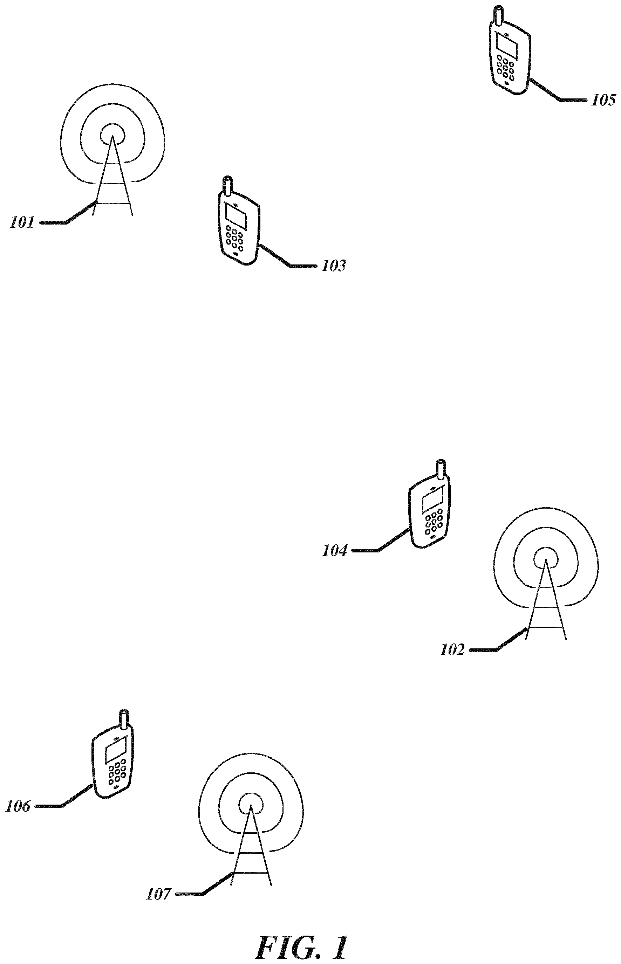

Figure 1 shows an example mobile device network environment, consistent with an example embodiment of the invention. This simplified mobile device network includes several mobile devices such as cellular telephone 103, and cellular network towers such as 101. Here, the towers 101 and 102 are located some geographic distance from one another, to provide service over a broader area that would be covered by a single cell phone tower.

In the network space shown in Figure 1, mobile cellular device 103 is located between cellular phone network towers 101 and 102. It therefore likely receives a reasonably strong signal from tower 101, and a somewhat less strong signal from 102. Mobile device 104 is similarly located between the two cell phone towers 101 and 102, but is nearer to 102 and likely therefore receives a stronger signal from tower 102 than from 101.

Mobile cellular device 105 is in this example within range of cell phone tower 102, but is out of range of tower 101. Its location and signal strength can therefore be used to determine both how well cell phone tower 102 covers mobile device 105's location, as well as to establish that the mobile device at the location shown at 105 could not receive a signal from tower 101.

Similarly, mobile cellular device 106 is in a geographic location where it cannot receive a sufficient signal to provide communication from either cell phone tower 101 or cell phone tower 102. The phone in some embodiments of the invention is operable to record both its physical location as well as the insufficient signal from tower 102 or the lack of a signal received, and is able to communicate this data once within range of a cell phone tower to enable determination that a cell phone at location 106 cannot reliably operate in the network shown.

Compiled information such as this can be used to determine not only the quality of service available to cellular mobile devices in different areas, but to plan or improve cellular network performance such as by placing a new cell phone tower in location 107 to provide enhanced coverage.

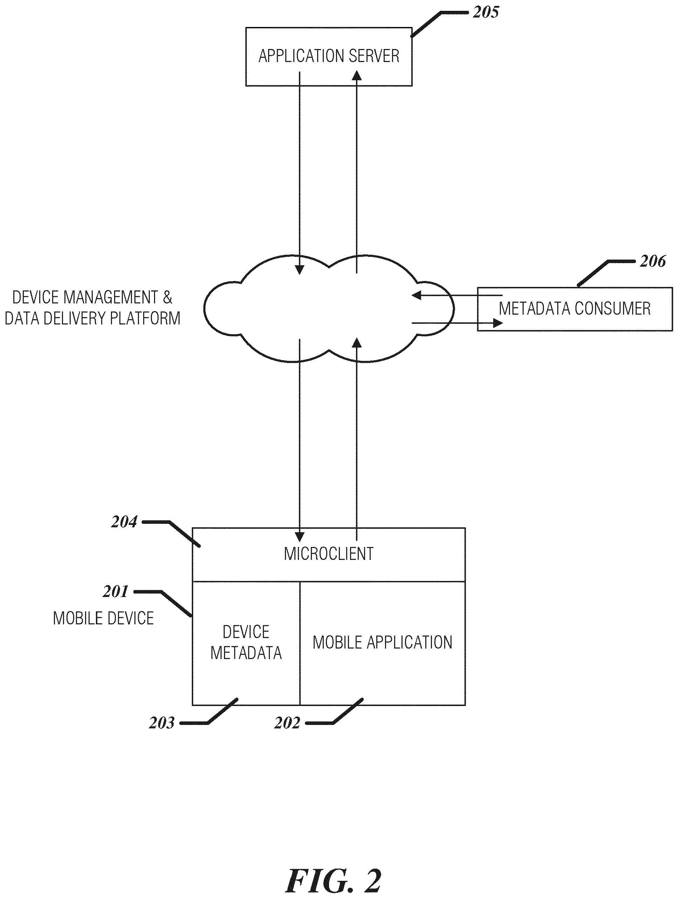

A more detailed example of a cellular mobile device such as device 103 in a cellular network environment is shown in Figure 2. Here, mobile cellular device 201 is executing mobile device code, such as an operating system or an application 202 that includes functionality enabling gathering of device metadata as shown at 203. The mobile device's executing code further includes a cellular network communications microclient 204, which is operable to exchange data over a mobile device network such as the cellular network shown in Figure 1 with network services, such as application server 205 and metadata server 206.

In a more detailed example of operation, the user installs an application on a cell phone or other mobile cellular device. The mobile application 202 uses a microclient 204 to communicate with a server 205 to provide application functionality, such as to provide email to the user, to provide weather information, or to provide a social network interface. The microclient 204 installed with the application 202 also includes a device metadata application 203, operable to collect various forms of metadata and communicate them via the microclient 204 to a metadata collection agent or server 206.

The microclient is in a further example provided to the mobile application developer under license terms that include incorporation of the microclient and device metadata collection agent, simplifying the application developer's task of facilitating communication between the mobile device application 202 and the server 205 in exchange for incorporation of the device metadata collection agent 203. The metadata consumer 206 in this embodiment is a separate entity from the application server 205, as illustrated in Figure 2. In another example, mobile application 202 is a cell phone operating system, device metadata 203 is collected by the phone's operating system or firmware as part of the normal operation of the mobile cellular device, and the device metadata is provided by a communications client 204 to the cell phone provider 206, such as AT&T or Verizon. In such an example, an application server 205 need not be employed for the microclient 204 to deliver device metadata 203 to the cell phone provider 206.

Metadata includes in various embodiments a variety of characteristics regarding the mobile device's state of operation. For example, geographic location and signal strength can be used to determine the health of a network, geographic distribution of customers, relative performance of different mobile devices, and other such things useful to the network provider. Battery life and life of operation for various device types can be used to better understand battery performance, and to provide or sell replacement batteries when appropriate. Other data, including WiFi and Bluetooth network operation and configuration, dropped call data, achieved bandwidth, and a variety of other such data are also communicated as metadata in various embodiments, and used by the metadata consumer for a variety of purposes.

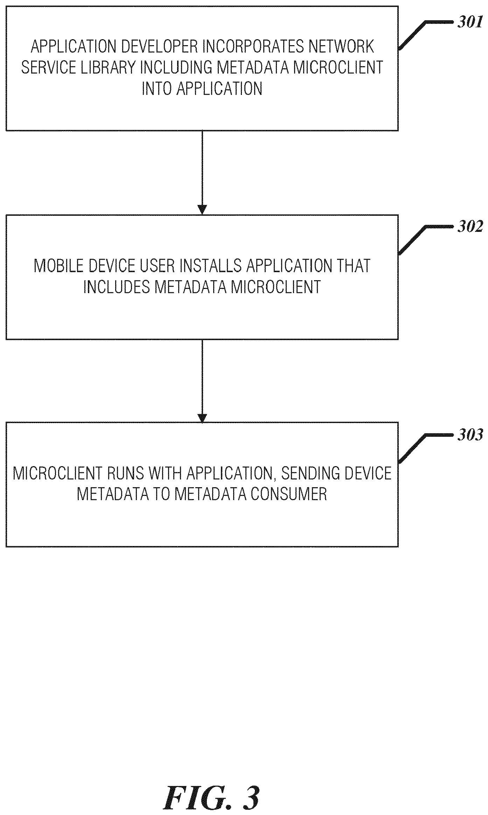

Figure 3 shows an example of incorporation of a metadata microclient into a mobile cellular device application, consistent with an example embodiment of the invention. At 301, the application developer incorporates a network service library that includes a metadata microclient into an application under development. The developer may elect to incorporate the service library including the metadata client to avoid creating a network service library of functions from scratch, for a fee paid by the metadata consumer, or for other such business reasons.

The completed application is then installed on a mobile device at 302, such as by being downloaded and installed from an application store provided by the cellular device manufacturer or service provider. The application in some further examples includes as part of the license an agreement to install and run the metadata microclient in exchange for providing the application to the mobile device user.

When the user installs and runs the application as reflected at 302, the microclient runs 303 with the application and sends device metadata to the metadata consumer. The microclient in some embodiments is operable to run even when the application is not executing, or to gather device metadata while the application is
not running such that the data is saved for communication to the metadata consumer when the application and microclient are next executed.

These examples illustrate how a metadata communications module can be installed on a mobile networked device such as a cellular telephone, and can be used to provide useful metadata to a metadata consumer. Although specific embodiments have been illustrated and described herein, it will be appreciated by those of ordinary skill in the art that any arrangement which is calculated to achieve the same purpose may be substituted for the specific embodiments shown. The invention may be implemented in various modules and in hardware, software, and various combinations thereof, and any combination of the features described in the examples presented herein is explicitly contemplated as an additional example embodiment. This application is intended to cover any adaptations or variations of the example embodiments of the invention described herein. It is intended that this invention be limited only by the claims, and the full scope of equivalents thereof

### Additional Notes & Examples

Example 1 can include subject matter (such as a method, means for performing acts, or machine-readable medium including instructions that, when performed by a machine cause the machine to performs acts) comprising generating metadata in the mobile networked device, capturing the metadata in a mobile device metadata communications client, and communicating the metadata to a remote metadata consumer.
   wherein the metadata comprises at least one of GPS location, cell tower-derived location, battery state, sent signal strength, received signal strength, mobile device type, and mobile device identity.
In Example 3, the subject matter of one or any of Examples 1 and 2 can optionally include, wherein the mobile device metadata communications client is installed as part of an application.
In Example 4, the subject matter of Example 3 can optionally include, wherein the mobile device metadata communications client further comprises a communications client for the application.
In Example 5, the subject matter of Example 4 can optionally include, wherein the communications client for the application communicates with a server other than the remote metadata consumer.
In Example 6, the subject matter of one or any of Examples 1-5 can optionally include, wherein the mobile device metadata communications client comprises a part of the mobile cellular device firmware or operating system.
In Example 7 the subject matter of one or any of Examples 1-5 can optionally include, storing metadata while the mobile networked device is not in communication with the network so that the stored metadata can be sent to the remote metadata consumer via the mobile device metadata communications client when the mobile networked device reestablishes network communication.
Example 8 can include, or can optionally be combined with the subject matter of one or any combination of Examples 1-7 to include, subject matter (such as a method, means for performing acts, or machine-readable medium including instructions that, when performed by a machine cause the machine to performs acts) comprising generating metadata in the mobile networked device, and capturing the metadata in a mobile device communications client that is installed with an application; the mobile device communications client provided to the application developer such that the client is operable to exchange application data with an application server and to exchange metadata with a remote metadata consumer.
Example 9 can include, or can optionally be combined with the subject matter of one or any combination of Examples 1-8 to include, subject matter (such as an apparatus, device, machine, system, or mobile networked device) comprising a device module operable to generate metadata in the mobile networked device, and a metadata communications module operable to capture the metadata in a mobile device, and to communicate the metadata to a remote metadata consumer.
In Example 10, the subject matter of Example 9 can optionally include, wherein the metadata comprises at least one of GPS location, cell tower-derived location, battery state, sent signal strength, received signal strength, mobile device type, and mobile device identity.
In Example 11, the subject matter of one or any of Examples 9 and 10 can optionally include, wherein the mobile device metadata communications client is installed as part of an application.
In Example 12, the subject matter of Example 11 can optionally include, wherein the mobile device metadata communications client further comprises a communications client for the application operable to communicate with a server other than the remote metadata consumer.
In Example 13, the subject matter of one or any of Examples 9-12 can optionally include, wherein the mobile device metadata communications client comprises a part of the mobile cellular device firmware or operating system.
In Example 14, the subject matter of one or any of Examples 9-13 can optionally include, the metadata communications module further operable to store metadata while the mobile networked device is not in communication with the network so that the stored metadata can be sent to the remote metadata consumer via the mobile device metadata communications client when the mobile networked device reestablishes network communication.
Example 15 can include, or can optionally be combined with the subject matter of one or any combination of Examples 1-14 to include, subject matter (such as an apparatus, device, machine, system, or mobile networked device) comprising a device module operable to generate metadata in the mobile networked device, and a metadata communications module operable to capture the metadata in a mobile device communications client that is installed with an application; the mobile device communications client provided to the application developer such that the client is operable to exchange application data with an application server and to exchange metadata with a remote metadata consumer.
Example 16 can include, or can optionally be combined with the subject matter of one or any combination of Examples 1-5 to include, subject matter (such as a method, means for performing acts, or machine-readable medium including instructions that, when performed by a machine cause the machine to performs acts) comprising generate metadata in the mobile networked device, capture the metadata in a mobile device metadata communications client, and communicate the metadata to a remote metadata consumer.
In Example 17, the subject matter of Example 16 can optionally include, wherein the metadata comprises at least one of GPS location, cell tower-derived location, battery state, sent signal strength, received signal strength, mobile device type, and mobile device identity.
In Example 18, the subject matter of one or any of Examples 16 and 17 can optionally include, wherein the mobile device metadata communications client is installed as part of an application and the mobile device metadata communications client further comprises a communications client for the application, the communications client for the application operable to communicate with a server other than the remote metadata consumer.
In Example 19 the subject matter of one or any of Examples 16-18 can optionally include, wherein the mobile device metadata communications client comprises a part of the mobile cellular device firmware or operating system.
In Example 20 the subject matter of one or any of Examples 16-19 can optionally include, to cause the computerized mobile network device to store metadata while the mobile networked device is not in communication with the network so that the stored metadata can be sent to the remote metadata consumer via the mobile device metadata communications client when the mobile networked device reestablishes network communication.

The above detailed description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the invention should be determined with reference to the appended claims.

## Claims

1. A mobile networked device (201), comprising:
a microclient (204) operable to exchange data over a network;
the mobile networked device (201) further comprises:
a mobile application (202) operable to generate metadata in the mobile networked device (201) during execution of the mobile application on the mobile networked device, wherein the mobile networked device (201) is configured to use the generated metadata for providing application functionality and communicating the generated metadata to an application server (205) through the microclient; and
a device metadata application (203) operable to collect the metadata generated by the mobile application, and to communicate the metadata to a remote metadata consumer (206) through the microclient, the metadata being used for a purpose other than the specific purpose for which the metadata was generated.

2. The mobile networked device (201) of claim 1, wherein the metadata comprises at least one of GPS location, cell tower-derived location, battery state, sent signal strength, received signal strength, mobile device type, and mobile device identity.

3. The mobile networked device (201) of claim 1, wherein the device metadata application is installed as part of the microclient.

4. The mobile networked device (201) of claim 3, wherein the microclient (204) is operable to communicate with the application server (205) which is not the remote metadata consumer (206).

5. The mobile networked device (201) of claim 1, wherein the device metadata application comprises a part of the mobile cellular device firmware or operating system.

6. The mobile networked device (201) of claim 1, the device metadata application further operable to store metadata while the mobile networked device (201) is not in communication with a network so that the stored metadata can be sent to the remote metadata consumer (206) via the device metadata application when the mobile networked device (201) reestablishes network communication.

7. A method of communicating metadata from a mobile networked device (201), comprising:
generating metadata in the mobile networked device (201) through the execution of a mobile application (202) on the mobile networked device;
using the metadata in the mobile networked device to provide functionality of the mobile application and to communicate the generated metadata to an application server (205) through a microclient (204) operable to exchange data over a network;
capturing the metadata using a device metadata application (203); and
communicating the metadata to a remote metadata consumer (206) through the microclient (204), the metadata being used for a purpose other than the specific purpose for which metadata was generated.

8. The method of claim 7, wherein the metadata comprises at least one of GPS location, cell tower-derived location, battery state, sent signal strength, received signal strength, mobile device type, and mobile device identity.

9. The method of claim 7, wherein the microclient (204) for the application (202) communicates with the application server (205) which is not the remote metadata consumer (206).

10. The method of claim 7, wherein the device metadata application comprises a part of the mobile cellular device firmware or operating system.

11. The method of claim 7, further comprising storing metadata while the mobile networked device (201) is not in communication with a network so that the stored metadata can be sent to the remote metadata consumer (206) via the device metadata application when the mobile networked device (201) reestablishes network communication.

12. A machine-readable medium with instructions stored thereon, the instructions when executed operable to cause a computerized mobile networked device (201) to:
generate metadata in the mobile networked device (201) through the execution of a mobile application (202) of the mobile networked device;
use the metadata in the mobile networked device to provide functionality of the mobile application and to communicate the generated metadata to an application server (205) through a microclient (204) operable to exchange data over a network;
capture the metadata using a device metadata application (203); and
communicate the metadata to a remote metadata consumer (206) through the microclient (204), the metadata being used for a purpose other than the specific purpose for which metadata was generated.

13. The machine-readable medium of claim 12, wherein the device metadata application is installed as part of an application (202) and the device metadata application further comprises the microclient (204) for the application (202), the microclient (204) for the application (202) operable to communicate with the application server (205) other than the remote metadata consumer (206).

## Patentansprüche

1. Mobile vernetzte Vorrichtung (201), umfassend:
einen Mikroclient (204), der betreibbar ist, um Daten über ein Netzwerk auszutauschen;
wobei die mobile vernetzte Vorrichtung (201) ferner umfasst:
eine mobile Anwendung (202), die betreibbar ist, um während einer Ausführung der mobilen Anwendung auf der mobilen vernetzten Vorrichtung Metadaten in der mobilen vernetzten Vorrichtung (201) zu generieren, wobei die mobile vernetzte Vorrichtung (201) ausgelegt ist, die generierten Metadaten zum Bereitstellen von Anwendungsfunktionalität und zum Kommunizieren der generierten Metadaten über den Mikroclient an einen Anwendungsserver (205) zu verwenden; und
eine Vorrichtungsmetadatenanwendung (203), die betreibbar ist, um die von der mobilen Anwendung generierten Metadaten zu sammeln und die Metadaten über den Mikroclient an einen entfernten Metadatenkonsumenten (206) zu kommunizieren,
wobei die Metadaten für einen anderen Zweck als den spezifischen Zweck verwendet werden, zu dem die Metadaten generiert wurden.

2. Mobile vernetzte Vorrichtung (201) nach Anspruch 1, wobei die Metadaten mindestens eines von einem GPS-Standort, einem von einem Mobilfunkmasten abgeleiteten Standort, einem Akkuzustand, einer Sendesignalstärke, einer Empfangssignalstärke, einem Typ der mobilen Vorrichtung und einer Identität der mobilen Vorrichtung umfassen.

3. Mobile vernetzte Vorrichtung (201) nach Anspruch 1, wobei die Vorrichtungsmetadatenanwendung als Teil des Mikroclients installiert ist.

4. Mobile vernetzte Vorrichtung (201) nach Anspruch 3, wobei der Mikroclient (204) betreibbar ist, um mit dem Anwendungsserver (205) zu kommunizieren, der nicht der entfernte Metadatenkonsument (206) ist.

5. Mobile vernetzte Vorrichtung (201) nach Anspruch 1, wobei die Vorrichtungsmetadatenanwendung einen Teil der Firmware oder des Betriebssystems der mobilen zellularen Vorrichtung umfasst.

6. Mobile vernetzte Vorrichtung (201) nach Anspruch 1, wobei die Vorrichtungsmetadatenanwendung ferner betreibbar ist, um die Metadaten zu speichern, während die mobile vernetzte Vorrichtung (201) nicht in Kommunikation mit einem Netzwerk steht, sodass die gespeicherten Metadaten über die Vorrichtungsmetadatenanwendung an den entfernten Metadatenkonsumenten (206) gesendet werden können, wenn die mobile vernetzte Vorrichtung (201) erneut eine Netzwerkkommunikation einrichtet.

7. Verfahren zum Kommunizieren von Metadaten von einer mobilen vernetzten Vorrichtung (201), umfassend:
Generieren von Metadaten in der mobilen vernetzten Vorrichtung (201) durch die Ausführung einer mobilen Anwendung (202) auf der mobilen vernetzten Vorrichtung;
Verwenden der Metadaten in der mobilen vernetzten Vorrichtung, um eine Funktionalität der mobilen Anwendung bereitzustellen und um die generierten Metadaten über einen Mikroclient (204), der betreibbar ist, um Daten über ein Netzwerk auszutauschen, an einen Anwendungsserver (205) zu kommunizieren;
Erfassen der Metadaten unter Verwendung einer Vorrichtungsmetadatenanwendung (203); und
Kommunizieren der Metadaten über den Mikroclient (204) an einen entfernten Metadatenkonsumenten (206), wobei die Metadaten für einen anderen Zweck als den spezifischen Zweck verwendet werden, zu dem die Metadaten generiert wurden.

8. Verfahren nach Anspruch 7, wobei die Metadaten mindestens eines von einem GPS-Standort, einem von einem Mobilfunkmasten abgeleiteten Standort, einem Akkuzustand, einer Sendesignalstärke, einer Empfangssignalstärke, einem Typ der mobilen Vorrichtung und einer Identität der mobilen Vorrichtung umfassen.

9. Verfahren nach Anspruch 7, wobei der Mikroclient (204) für die Anwendung (202) mit dem Anwendungsserver (205) kommuniziert, der nicht der entfernte Metadatenkonsument (206) ist.

10. Verfahren nach Anspruch 7, wobei die Vorrichtungsmetadatenanwendung einen Teil der Firmware oder des Betriebssystems der mobilen zellularen Vorrichtung umfasst.

11. Verfahren nach Anspruch 7, das ferner ein Speichern der Metadaten umfasst, während die mobile vernetzte Vorrichtung (201) nicht in Kommunikation mit einem Netzwerk steht, sodass die gespeicherten Metadaten über die Vorrichtungsmetadatenanwendung an den entfernten Metadatenkonsumenten (206) gesendet werden können, wenn die mobile vernetzte Vorrichtung (201) erneut eine Netzwerkkommunikation einrichtet.

12. Maschinenlesbares Medium mit darauf gespeicherten Anweisungen, wobei die Anweisungen bei Ausführung betreibbar sind, um zu bewirken, dass eine computerisierte mobile vernetzte Vorrichtung (201):
Metadaten in der mobilen vernetzten Vorrichtung (201) durch die Ausführung einer mobilen Anwendung (202) der mobilen vernetzten Vorrichtung generiert;
die Metadaten in der mobilen vernetzten Vorrichtung verwendet, um eine Funktionalität der mobilen Anwendung bereitzustellen und um die generierten Metadaten über einen Mikroclient (204), der betreibbar ist, um Daten über ein Netzwerk auszutauschen, an einen Anwendungsserver (205) zu kommunizieren;
die Metadaten unter Verwendung einer Vorrichtungsmetadatenanwendung (203) erfasst; und
die Metadaten über den Mikroclient (204) an einen entfernten Metadatenkonsumenten (206) kommuniziert, wobei die Metadaten für einen anderen Zweck als den spezifischen Zweck verwendet werden, zu dem die Metadaten generiert wurden.

13. Maschinenlesbares Medium nach Anspruch 13, wobei die Vorrichtungsmetadatenanwendung als Teil einer Anwendung (202) installiert ist und die Vorrichtungsmetadatenanwendung ferner den Mikroclient (204) für die Anwendung (202) umfasst, wobei der Mikroclient (204) für die Anwendung (202) betreibbar ist, um mit dem vom entfernten Metadatenkonsumenten (206) verschiedenen Anwendungsserver (205) zu kommunizieren.

## Revendications

1. Dispositif en réseau mobile (201), comprenant :
un microclient (204) fonctionnel pour échanger des données sur un réseau ;
le dispositif en réseau mobile (201) comprenant en outre :
une application mobile (202) fonctionnelle pour générer des métadonnées dans le dispositif en réseau mobile (201) durant l'exécution de l'application mobile sur le dispositif en réseau mobile, le dispositif en réseau mobile (201) étant configuré pour utiliser les métadonnées générées pour fournir une fonctionnalité d'application et communiquer les métadonnées générées à un serveur d'application (205) par l'intermédiaire du microclient ; et
une application de métadonnées de dispositif (203) fonctionnelle pour collecter les métadonnées générées par l'application mobile, et pour communiquer les métadonnées à un consommateur de métadonnées à distance (206) par l'intermédiaire du microclient, les métadonnées étant utilisées pour un objectif autre que l'objectif spécifique pour lequel les métadonnées ont été générées.

2. Dispositif en réseau mobile (201) selon la revendication 1, dans lequel les métadonnées comprennent au moins l'un parmi un emplacement GPS, un emplacement dérivé d'une station cellulaire, une état de batterie, une intensité de signal envoyée, une intensité de signal reçue, un type de dispositif mobile et une identité de dispositif mobile.

3. Dispositif en réseau mobile (201) selon la revendication 1, dans lequel l'application de métadonnées de dispositif est installée en tant que partie du microclient.

4. Dispositif en réseau mobile (201) selon la revendication 3, dans lequel le microclient (204) est fonctionnel pour communiquer avec le serveur d'application (205) qui n'est pas le consommateur de métadonnées à distance (206).

5. Dispositif en réseau mobile (201) selon la revendication 1, dans lequel l'application de métadonnées de dispositif comprend une partie du micrologiciel ou système d'exploitation de dispositif cellulaire mobile.

6. Dispositif en réseau mobile (201) selon la revendication 1, dans lequel l'application de métadonnées de dispositif est en outre fonctionnelle pour stocker des métadonnées pendant que le dispositif en réseau mobile (201) n'est pas en communication avec un réseau de telle sorte que les métadonnées stockées peuvent être envoyées au consommateur de métadonnées à distance (206) par l'intermédiaire de l'application de métadonnées de dispositif lorsque le dispositif en réseau mobile (201) rétablit une communication par réseau.

7. Procédé de communication de métadonnées à partir d'un dispositif en réseau mobile (201), comprenant :
générer des métadonnées dans le dispositif en réseau mobile (201) par l'intermédiaire de l'exécution d'une application mobile (202) sur le dispositif en réseau mobile ;
utiliser les métadonnées dans le dispositif en réseau mobile pour fournir une fonctionnalité de l'application mobile et pour communiquer les métadonnées générées à un serveur d'application (205) par l'intermédiaire d'un microclient (204) fonctionnel pour échanger des données sur un réseau ;
capturer les métadonnées à l'aide d'une application de métadonnées de dispositif (203) ; et
communiquer les métadonnées à un consommateur de métadonnées à distance (206) par l'intermédiaire du microclient (204), les métadonnées étant utilisées pour un objectif autre que l'objectif spécifique pour lequel les métadonnées ont été générées.

8. Procédé selon la revendication 7, dans lequel les métadonnées comprennent au moins l'un parmi un emplacement GPS, un emplacement dérivé d'une station cellulaire, un état de batterie, une intensité de signal envoyée, une intensité de signal reçue, un type de dispositif mobile et une identité de dispositif mobile.

9. Procédé selon la revendication 7, dans lequel le microclient (204) pour l'application (202) communique avec le serveur d'application (205) qui n'est pas le consommateur de métadonnées à distance (206).

10. Procédé selon la revendication 7, dans lequel l'application de métadonnées de dispositif comprend une partie du micrologiciel ou système d'exploitation de dispositif cellulaire mobile.

11. Procédé selon la revendication 7, comprenant en outre le stockage de métadonnées pendant que le dispositif en réseau mobile (201) n'est pas en communication avec un réseau de telle sorte que les métadonnées stockées peuvent être envoyées au consommateur de métadonnées à distance (206) par l'intermédiaire de l'application de métadonnées de dispositif lorsque le dispositif en réseau mobile (201) rétablit une communication par réseau.

12. Support lisible par machine avec des instructions stockées sur celui-ci, les instructions, lorsqu'elles sont exécutées, étant fonctionnelles pour amener un dispositif en réseau mobile (201) informatisé à :
générer des métadonnées dans le dispositif en réseau mobile (201) par l'intermédiaire de l'exécution d'une application mobile (202) du dispositif en réseau mobile ;
utiliser les métadonnées dans le dispositif en réseau mobile pour fournir une fonctionnalité de l'application mobile et pour communiquer les métadonnées générées à un serveur d'application (205) par l'intermédiaire d'un microclient (204) fonctionnel pour échanger des données sur un réseau ;
capturer les métadonnées à l'aide d'une application de métadonnées de dispositif (203) ; et
communiquer les métadonnées à un consommateur de métadonnées à distance (206) par l'intermédiaire du microclient (204), les métadonnées étant utilisées pour un objectif autre que l'objectif spécifique pour lequel les métadonnées ont été générées.

13. Support lisible par machine selon la revendication 13, dans lequel l'application de métadonnées de dispositif est installée en tant que partie d'une application (202) et l'application de métadonnées de dispositif comprend en outre le microclient (204) pour l'application (202), le microclient (204) pour l'application (202) étant fonctionnel pour communiquer avec le serveur d'application (205) autre que le consommateur de métadonnées à distance (206).
